Europäisches Patentamt

European Patent Office

Office européen des brevets

(11) Publication number: **0 187 126**
A2

# EUROPEAN PATENT APPLICATION

(21) Application number: 85850320.4

(22) Date of filing: 11.10.85

(51) Int. Cl.⁴: **B 60 B 9/12**

(30) Priority: 11.10.84 SE 8405086

(43) Date of publication of application: 09.07.86
Bulletin 86/28

(84) Designated Contracting States: **AT BE CH DE FR GB IT LI NL SE**

(71) Applicant: **FORSHEDA INNOVATION AB,**
**S-330 12 Forsheda (SE)**

(72) Inventor: **Nordin, Olof, Prinsgatan 9, S-331 00 Värnamo (SE)**
Inventor: **Hallstedt, Göran, Ekelundsvägen 5, S-342 00 Alvesta (SE)**
Inventor: **Sporre, Anders, Gjuterigatan 5, S-331 00 Värnamo (SE)**

(74) Representative: **Linde, Leif, Vernamo Patentbyrä AB P.O. Box 1, S-270 11 Abbekas (SE)**

(54) A wheel.

(57) A wheel comprises a central portion (48) and a peripheral portion (56). The central portion (48) is connectable with a shaft and the peripheral portion (56) substantially consists of an essentially rigid material. Opposite surfaces (52, 54; 58, 60) of the central portion and the peripheral portion are positioned at a radial distance from each other and the central portion and the peripheral portion are connected with each other by connecting means comprising an elastomeric material element (62) connected with the central portion and the peripheral portion in a stretched or pretensioned condition.

The present invention relates to a wheel comprising a central portion connectable with a shaft and a peripheral portion connected with said central portion and substantially consisting of an essentially rigid material, for example metal or plastic.

Wheels of the kind having a peripheral portion consisting of a substantially rigid material, for example metal or plastic, have many advantages such as small resistance to rolling, great wear resistance and strength and low price and are used for many applications. However, it is a drawback of previously known wheels of this kind that they have restricted capacity for damping vibrations and trembling created by irregularities of the surface on which a device provided with the wheels, for example an industrial truck or barrow is moved. Thus, the wheels will transmit vibrations to the device provided with the wheels which is disadvantageous.

In order to reduce this drawback it is previously known to position opposite surfaces of the central portion and the peripheral portion at a radial distance from each other and to fill up the space between said opposite surfaces with an elastomeric material. Thereby, the transfer of vibrations from the peripheral portion to the central portion of the wheels and thereby of course also to the device provided with the wheels is reduced. In spite of the fact that previously known wheels of this kind provide a certain reduction of transfer of vibrations there is in many cases required wheels having further improved properties in this respect.

It is the object of the invention to provide a wheel having improved properties with regard to the capacity of reducing the transfer of vibrations.

In order to comply with this object there is provided a wheel having a central portion connectable with a shaft and a peripheral portion connected with said central portion and substantially consisting of essentially rigid material, in which wheel opposite surfaces of the central portion and the peripheral portion are positioned at a radial distance from each other and the peripheral portion is connected with the central portion by connecting means including elastomeric material, the wheel according to the invention being characterized in that the connecting means comprises an elastomeric material element which is connected between the peripheral portion and the central portion in a stretched or tensioned condition.

Because of the fact that the central portion and the peripheral portion are connected with each other by means of an elastomeric material which is in a stretched or tensioned condition there is provided a surprising improvement of the capacity of the wheel to reduce the transfer of vibrations.

In an embodiment of a wheel according to the invention the connecting means comprises two annular elastomeric material elements positioned at opposite sides of the wheel and being in a stretched or tensioned position connected at one edge portion with the central portion and at the other edge portion with the peripheral portion.

In another embodiment of the invention the connecting means comprises an annular elastomeric material element which in a stretched or tensioned condition extends in such a way between surface portions of the central portion and surface portions of the peripheral portions that the portions of the element engaging said surface portions of the central portion are positioned at a greater radial distance from the axis of the wheel than the portions of the element engaging the surface portions of the peripheral portion.

The invention is described in the following with reference to the accompanying drawings. Fig. 1 is an axial section of an embodiment of a wheel according to the invention. Fig. 2 is an axial section of another embodiment of a wheel according to the invention. Fig. 3 is a cross-sectional view of a further embodiment of a wheel according to the invention.

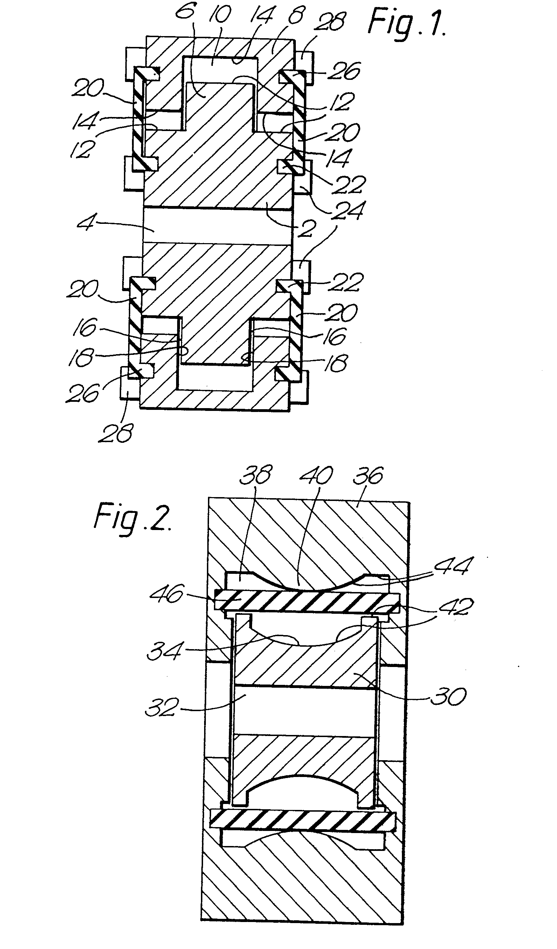

In Fig. 1 there is shown a wheel according to the invention comprising a central portion 2 having a central hole 4 for receiving a shaft not shown, the central portion 2 being adapted either to be unrotatably connected with the shaft which is thereby rotatably supported by the device to which the wheel is to be connected or to be rotatably connected with the shaft which is thereby adapted to be unrotatably connected with the said device. The central portion 2 has a cylindrical basic shape including a peripheral central projection 6. The wheel also comprises a peripheral portion 8 which forms a rim of the wheel. Also the peripheral portion 8 is of cylindrical basic shape having an inner peripheral recess 10 into which the projection 6 extends. The opposite surfaces 12 and 14 of the central portion and the peripheral portion, respectively, are parallel with the axis of the wheel and are positioned at a radial distance from each other so that the peripheral portion 8 is radially movable in relation to the central portion 2 into a somewhat eccentric position in relation thereto. The surfaces 16 and 18 which are also opposite to each other and extend perpendicular to the axis of the wheel are positioned at a small axial distance from each other so that there is only the normal clearance space between the surfaces for allowing said radial movement of the peripheral portion. The central portion 2 and the peripheral portion 8 are thereby substantially indisplacably connected with each other in the axial direction. The central portion 2 and the peripheral portion 8 consist of an essentially rigid material, for example metal or a hard polymer material.

The central portion 2 and the peripheral portion 8 are connected with each other by means of annular elements 20 of elastomeric material, for example rubber. The inner edge portions 22 of the elements 20 are connected with the central portion, the edge portions extending into grooves in the central portion and being retained therein by means of clamping elements 24. The outer edge portions 26 of the elements 20 are in a corresponding way connected with the peripheral portion 8 by the fact that the edge portions extend into grooves in the peripheral portion and are retained by means of clamping elements 28.

Thus, the central portion 2 and the peripheral portion 8 are elastically connected with each other, so that the wheel will damp the movements of the peripheral portion 8 created when a device provided with the wheels according to the invention is moved along an irregular surface. Especially advantageous properties with regard to the damping capacity is provided by the fact that the elastomeric material elements 20 in accordance with the invention are pretensioned already in the concentric position between the central portion 2 and the peripheral portion 8. This pretensioned condition has been provided by radially tensioning the elements 20 before connection the edge portions 22 and 26 with the central portion 2 and the peripheral portion 8, respectively. Preferably the pretensioning of the elements 20 is of such a degree that a certain tensioning is remaining also at such portions of the periphery of the wheel where the opposing surfaces 12 and 14 are momentarily moved into a position adjacent each other when the wheel is loaded.

In Fig. 2 there is shown an axial section of a wheel comprising a central portion 30 having a central hole 32 and a peripheral outer recess 34. The wheel also comprises a peripheral portion 36 having a recess 38 into which the central portion 30 partially extends. The recess 38 has at its bottom a projection 40 of convex shape corresponding to the shape of the concave bottom of the recess 34. The opposite surfaces 42 and 44 of the central portion 30 and the peripheral portion 36, respectively, which surfaces are substantially parallel with the axis of the wheel, are positioned at a radial distance from each other, so that the peripheral portion 36 is radially movable in relation to the central portion 30. The peripheral portion 36 is connected with the central portion 30 by means of an elastomeric material element 46.

The element 46 is constituted by an annular strip which is pretensioned in its transversal direction, i.e. in the axial direction of the wheel. Because of its tensioned condition the element 46 retains the central portion 30 and the peripheral portion 36 in a concentric position in relation to each other when the wheel is without load and the element 46 damps the transfer of vibrations between the two portions 30 and 36 of the wheel when the wheel is working.

When the wheel is loaded so that the peripheral portion 36 strives to move from the concentric position in relation to the central portion 30 the elastomeric material element 46 is at the side at which the central portion 30 and the peripheral portion 36 moves towards each other initially subjected to an increasing tensioning and stretching while it is at an extreme position of eccentricity between the peripheral portion 36 and the central portion 30 locally clamped between the opposite surfaces 42 and 44. This provides a spring action of the wheel in which the resistance against displacement towards the eccentric position initially takes place at a restricted resistance and then, in a bottom position, takes place at a great resistance which does not increase stepwise but also in the bottom position takes place at a certain spring action.

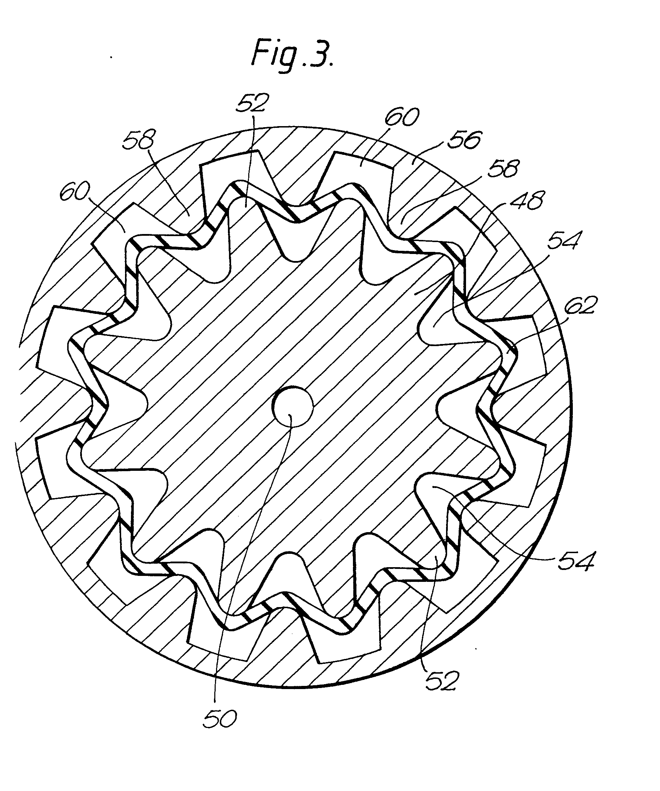

In Fig. 3 there is shown a cross-section of an embodiment of a wheel comprising a central portion 48 having a central hole 50 and a number of radially outwardly extending projections 52 forming between themselves recesses 54. The wheel also comprises a peripheral portion 56 having radially inwardly extending projections 58 forming between themselves recesses 60. The projections 52 and 58 are so positioned and is of such size that they extend into the recesses 60 and 54, respectively, but in spite thereof provide for a certain relative movement between the central portion 48 and the peripheral portion 56.

The central portion 48 and the peripheral portion 56 are connected with each other by means of an elastomeric material element 62. The element 62 consists of an annular strip which in a pretensioned position extends along a zig-zag- line between the points of the projections 52 and 58 of the central portion 48 and the peripheral portion 56, respectively.

The element 62 provides for a restricted resilient relative motion between the central portion 48 and the peripheral portion 56 with regard to movement from the concentric position as well as with regard to rotational movement.

When the wheel is loaded so that the peripheral portion 56 strives to move from the concentric position in relation to the central portion 48 the element 62 is at the side of the wheel where the central portion 48 and the peripheral portion 56 are moved towards each other initially subjected to an increasing stretching while it is at an extreme position of eccentricity between the central portion and the peripheral portion clamped between the points of the projections 52 and 58 and the bottoms of the recesses 60 and 54, respectively. Thus, the wheel has substantially the same spring action as described with reference to Fig. 2.

The wheel according to Fig. 3 is advantageous with regard to the fact that it is extremely easy to mount requiring no binding or clamping of the elastomeric material element in addition to the retaining automatically obtained when the elastomeric material strip is tensioned between the projections 52 and 58. The different portions of the wheel according to Fig. 3 are of course retained in correct position in relation to each other by means of side portions, not shown in the drawing.

The wheel according to the invention can be modified within the scope of the following claims. In order to provide a further noise reduction it might be advantageous to provide the outer peripheral surface of the peripheral portion with a thin elastomeric material layer without loosing the advantages of a wheel having a peripheral portion of a substantially rigid material.

CLAIMS

1. A wheel comprising a central portion (2; 30; 48) connectable with a shaft and comprising a peripheral portion (8; 36; 56) connected with the central portion and substantially consisting of. an essentially rigid material, in which opposite surfaces (12, 14; 40, 42; 52, 54; 58, 60) of the central portion and the peripheral portion are positioned at a radial distance from each other and the peripheral portion is connected with the central portion by connecting means (20; 50; 62) comprising an elastomeric material, c h a r a c t e r i z e d in that said connecting means comprises an elastomeric material element (20; 50; 62) connected between the peripheral portion (8; 36; 56) and the central portion (2; 30; 48) in a pretensioned condition.

2. A wheel as claimed in claim 1, c h a r a c t e r i z e d in that said connecting means comprises two annular elastomeric material elements (20) positioned at opposite sides of the wheel and being in said pretensioned condition at one edge portion connected with the central portion (2) and at the other end portion connected with the peripheral portion (8).

3. A wheel as claimed in claim 1, c h a r a c t e r i z e d in that said connecting means comprises an annular elastomeric material element which in said pretensioned condition extends between surface portions of the central portion and surface portions of the peripheral portion, said surface portions being substantially parallel with the wheel axis and being positioned at a radial as well as a peripheral distance from each other.

4. A wheel as claimed in claim 3, c h a r a c t e r i z e d in that said surface portions are positioned at the points of the radially extending projections on the central portion as well as on the peripheral portion, the projections of the central portion extending into recesses between the projections of the peripheral portion and vice versa.

Fig.1.

Fig.2.

2/2

Fig.3.